# EUROPEAN PATENT SPECIFICATION

(11) **EP 4 181 677 B1**
(45) Date of publication and mention of the grant of the patent: **08.07.2026**
(21) Application number: 21766234.5
(22) Date of filing: 01.09.2021
(51) Int. Cl.: A01N 25/02, A01N 25/04, A01N 25/30, A01N 43/653

(54) **A LIQUID AGROCHEMICAL COMPOSITION**
FLÜSSIGE AGROCHEMISCHE ZUSAMMENSETZUNG
COMPOSITION AGROCHIMIQUE LIQUIDE

(30) Priority: 02.09.2020 IN 202011037863
(43) Date of publication of application: 24.05.2023
(73) Proprietor: UPL Corporation Limited, Port Louis (MU); UPL Europe Ltd, Warrington, Cheshire WA3 6YN (GB)
(72) Inventor: VAN DER LAAN, Alexander Cornelis, Warrington, Cheshire WA3 6YN (GB); NIEUWDORP, Manuel Augustein Cornelis, Warrington, Cheshire WA3 6YN (GB); DE JONG, Angelo Johannes, Warrington, Cheshire WA3 6YN (GB)
(74) Representative: Page White Farrer
(86) International application number: PCT/IB2021/057987
(87) International publication number: WO 2022/049503

(56) References cited:
- WO-A1-2011/037968
- WO-A1-2013/139753
- US-A1- 2014 031 232

## Description

**Field of the disclosure:** The present disclosure relates to a liquid agrochemical composition based on a solvent system. The present disclosure more particularly relates to a stable liquid agrochemical composition in the form of dispersible concentrates, a process for its preparation, and a method for controlling pests.

### Background

Dispersible concentrates (DC) are formulations of an active ingredient dissolved in a water-miscible, polar solvent together with a dispersing or emulsifying agent, designed for dilution in water to provide stable, fine particle size dispersions. DC formulations are alternatives to soluble concentrate (SL), suspension concentrate (SC), emulsion concentrate (EC) and micro-emulsion (ME) formulations, being suitable for active ingredients whose physical, chemical or biological properties preclude the use of these more conventional formulations.

In a DC formulation, a water miscible organic solvent, or a mixture of multiple solvents, is usually used to dissolve one or more agrochemical ingredients having low water solubility. After dilution of the DC in water, the one or more agrochemical ingredients precipitate out and disperse as micronized solid particles as the water miscible organic solvents become diluted in the water.

DC formulations also contain surfactants that assist in achieving uniform and stable dispersion of the precipitated solid particles. Furthermore, DC formulations may contain other ingredients that function in various ways either in the formulation itself or when it is diluted with water, or when the product is applied on plants. By choosing the appropriate solvents and surfactants, the agrochemical ingredients can remain physically and chemically stable for an extended period of time, ensuring a long shelf life for the product.

The selection of suitable solvents and surfactants is critical in formulating DC formulations

Apart from imparting stability to the compositions, solvent selection is critical from an environmental perspective. Driven by legislation and evolving attitudes towards environmental issues, selecting green solvents is preferred with the aim to reduce use environmental damage.

Agrochemical ingredients such as the conazole fungicides, e.g. prothioconazole and triazolone herbicides, e.g, carfentrazone, are commonly formulated as liquid formulations and are offered for example as emulsifiable concentrates in the market. When stored under drastic conditions, such as elevated temperatures, light irradiation and oxygen contact, degradation of prothioconazole take place where the proportion of active ingredient in the formulations is reduced accordingly. Moreover, oil component present in emulsifiable concentrates enhances penetration of these agrochemical ingredients thereby making such formulations phytotoxic.

Therefore, it is highly desirable to develop an alternative formulation of these agrochemical ingredients of low water solubility which are stable over long periods of time, does not deteriorate under severe storage conditions, being less phytotoxic to plants and are environmentally friendlier than conventional formulations.

US 2014/0031232 A1 discloses herbicidal dispersible concentrates which include a herbicide and substantially water miscible amide-based solvents. Such concentrates may be diluted in water and used in methods to control weeds.

WO 2013/139753 A1 discloses a method for preparing a tank mix, which comprises the step of contacting a pesticide formulation, water, and a tank mix adjuvant, wherein the tank mix adjuvant comprises a base selected from a carbonate and/or a phosphate, and wherein the tank mix adjuvant is present in form of a particulate solid, which contains at least 10 wt% of the base.

WO 2011/037968 A1 discloses non-aqueous dispersible concentrates comprising metconazole, non-ionic surfactants, and solvents.

### Objectives of the present invention:

An objective of the present invention is to provide stable dispersible concentrate compositions.

Another objective of the present invention is to provide stable dispersible concentrate compositions which prevents crystallization of agrochemical ingredients having low water solubility upon dilution for end-use.

Another objective of the present invention is to provide stable dispersible concentrate compositions of agrochemical ingredients having low water solubility selected from prothioconazole or carfentrazone-ethyl

Another objective of the present invention is to provide stable dispersible concentrate compositions of agrochemical ingredients having low water solubility which are environmentally safe.

Another objective of the present invention is to provide stable dispersible concentrate compositions of agrochemical ingredients having low water solubility which are less phytotoxic to the plants.

Still another objective of the present invention is to provide process of preparation of stable dispersible concentrate compositions of agrochemical ingredients having low water solubility selected from prothioconazole or carfentrazone-ethyl

Further objective of the present invention is to provide method of control of pests by applying stable dispersible concentrate compositions of agrochemical ingredients having low water solubility selected from prothioconazole or carfentrazone-ethyl

### Summary of the invention:

In one aspect, the present invention provides a composition according to claim 1. In another aspect, the present invention provides a method of preparing the composition, according to claim 4. In still another aspect, the present invention provides a method of controlling pests, according to claim 5. Certain more specific aspects of the invention are set out in the dependent claims.

### Detailed Description

To overcome the crystallization of agrochemical active ingredients having a low water solubility, the inventors screened various solvents and surfactants as well as their combinations. Surprisingly, the inventors found that when a dispersible concentrate is diluted with water, crystallization of agrochemical active ingredients with low water solubility can be controlled by providing a crystallization controlling mix comprising a cyclic amide, a carboxylic acid or a derivative thereof, and an alkoxylated vegetable oil. The combination of cyclic amide, a carboxylic acid or a derivative thereof, and an alkoxylated vegetable oil not only prevents crystallization of active ingredients upon dilution for end use but it also provides a stable dispersible concentrate with good shelf life. Moreover, the presence of the cyclic amide being from the green category of solvents makes the composition safer for the environment.

The invention is defined by the claims.

More generally, the present disclosure provides a composition comprising:
(a) an agrochemical ingredient of low water solubility; and
(b) a crystallization controlling mix comprising a cyclic amide, a carboxylic acid or a derivative thereof and an alkoxylated vegetable oil.

According to an aspect, the composition of the present disclosure comprises an agrochemical ingredient of low water solubility.

As used herein, an agrochemical ingredient of low water solubility has a solubility of solubility of less than 50mg/l in water at 20°C, specifically less than 40 mg/l in water at 20°C.

According to an aspect of the present disclosure, said composition comprises agrochemical ingredient of low solubility from about 0.1% w/w to about 70% w/w and preferably from about 0.5% w/w to about 60% w/w of the total weight of the composition.

According to an aspect of the present disclosure, said composition comprises the agrochemical ingredient of low solubility in an amount from about 1% w/w to about 50% w/w of the total weight of the composition.

According to an aspect of the present disclosure, said composition also comprises a crystallization controlling mix.

In an aspect of the present disclosure, the crystallization controlling mix is present in an amount from about 1% w/w to about 70% w/w and preferably from about 5% w/w to about 60% w/w of the total weight of the composition.

In an aspect of the present disclosure, said composition comprises the crystallization controlling component in an amount from about 10% w/w to about 50% w/w of the total weight of the composition.

According to an aspect of the present disclosure, the composition comprises of a crystallization controlling component wherein said crystallization controlling mix comprises a cyclic amide, a carboxylic acid or a derivative thereof, and an alkoxylated vegetable oil.

According to the present disclosure, the cyclic amide of the crystallization controlling mix is n-butylpyrrolidone.

In the stable dispersion concentrates of the present invention, the cyclic amide of the crystallization controlling mix is N-butylpyrrolidone.

According to an aspect of the present disclosure, cyclic amide of the crystallization controlling mix is N-n-butylpyrrolidone.

In an aspect of the present disclosure, the cyclic amide comprises from about 1% w/w to about 70% w/w of the total weight of the composition.

In an aspect of the present disclosure, the cyclic amide comprises from about 5% w/w to about 60% w/w of the total weight of the composition.

In an aspect of the present disclosure, the cyclic amide comprises from about 10% w/w to about 50% w/w of the total weight of the composition.

According to an aspect of the present disclosure, crystallization controlling mix comprises of a carboxylic acid or a derivative thereof.

In the stable dispersion concentrates of the present invention, the carboxylic acid is ethyl-s-lactate.

According to an aspect of the present disclosure, the derivative of the carboxylic acid is an amide: N,N-dimethyldecanamide.

In an aspect of the present disclosure, the composition comprises the carboxylic acid or a derivative thereof in an amount from about 0.1% w/w to about 50% w/w and preferably from about 1% w/w to about 40% w/w of the total weight of the composition.

In an aspect of the present disclosure, the composition comprises carboxylic acid derivative from about 5% w/w to about 30% w/w of the total weight of the composition.

The crystallization controlling mix of the composition comprises an alkoxylated vegetable oil. In the stable dispersion concentrates of the invention, the alkoxylated vegetable oil comprises ethoxylated castor oil.

As used herein, the term "alkoxylated vegetable oil" means an oil of vegetable origin or a derivative of such an oil, comprising one or more alkoxylated groups of 1-8 carbon atoms. For example, the alkoxylated vegetable oil comprises structural units derived from an oil of vegetable origin and an alkylene oxide, wherein the alkylene oxide comprises ethylene oxide, propylene oxide, butylene oxide or mixtures of ethylene oxide and propylene oxide or mixtures of ethylene oxide and butylene oxide, wherein the alkylene oxide units may vary from about 1 to about 50.

According to an aspect of the disclosure, an alkoxylated vegetable oil of the crystallization controlling mix is selected from but not limited to the group consisting of alkoxylates of palm oil, soybean oil, rapeseed oil, rape seed (canola) oil, macadamia oil, avocado oil, palm kernel oil, sunflower seed oil, peanut oil, cottonseed oil, palm kernel oil, coconut oil, olive oil and castor oil.

According to an aspect of the disclosure, alkoxylation is preferably conducted on medium chain oils, such as castor oil, macadamia nut oil, cottonseed oil, and the like.

According to an aspect of the disclosure, the alkoxylated vegetable oil is alkoxylated castor oil, castor oil ethoxylate, alkoxylated cottonseed oil, cottonseed oil ethoxylate, or a combination thereof.

In an aspect of the disclosure, the alkoxylated vegetable oil is present in the compositions in an amount from about 0.1% w/w to about 50% w/w, and preferably from about 0.5% w/w to about 40% w/w of the total weight of the composition.

In an aspect of the disclosure, the composition comprises alkoxylated vegetable oil from about 1% w/w to about 30% w/w of the total weight of the composition.

In an embodiment, the cyclic amide and the carboxylic acid derivative are present in a ratio of 1:3 to 3:1.

In an embodiment, the cyclic amide and the alkoxylated vegetable oil are present in a ratio of 1:3 to 3:1.

In a preferred embodiment, the cyclic amide, the carboxylic acid derivative, and alkoxylated vegetable oil of the crystallization controlling mix are present in ratio 1:1:1.

In a preferred embodiment, the cyclic amide, carboxylic acid derivative, and alkoxylated vegetable oil of the crystallization controlling mix are present in ratio 2:1:1.

In a preferred embodiment, the cyclic amide, carboxylic acid derivative, and alkoxylated vegetable oil of the crystallization controlling mix are present in ratio 3:1:1.

The composition of the invention is formulated as a dispersible concentrate.

According to yet another aspect of the present disclosure, the composition of the present disclosure is found to be stable.

The disclosure provides a stable dispersible concentrate composition comprising:
a) an agrochemical ingredient of low water solubility; and
b) a crystallization controlling mix comprising a cyclic amide, a carboxylic acid or a derivative thereof, and an alkoxylated vegetable oil.

The stable dispersible concentrate composition comprises agrochemical ingredient of low solubility in an amount from about 0.1% w/w to about 70% w/w and preferably from about 0.5% w/w to about 60% w/w of the total weight of the composition.

The stable dispersible concentrate composition comprises crystallization controlling mix from about 1% w/w to about 70% w/w and preferably from about 5% w/w to about 60% w/w of the total weight of the composition.

According to an aspect of the present disclosure, the stable dispersible concentrate composition comprises crystallization controlling mix from about 5% w/w to about 60% w/w of the total weight of the composition.

According to an aspect of the present disclosure, there is provided a composition comprising:
(a) an agrochemical ingredient of low water solubility selected from a conazole or a triazolone agrochemical ingredient; and
(b) a crystallization controlling mix comprising a cyclic amide, an ester or amide derivative of a carboxylic acid and an alkoxylated vegetable oil.

The composition comprises the agrochemical ingredient of low water solubility in an amount from 0.1 % w/w to 70 % w/w of the total weight of the composition; and the composition comprises the crystallization controlling mix in an amount from 1 % w/w to 70 % w/w of the total weight of the composition.

According to an aspect of the disclosure, the agrochemical ingredient of low water solubility is from the conazole group, their salts and derivatives thereof.

According to an aspect of the disclosure, the agrochemical ingredient from the conazole group is selected from imidazoles and triazoles, their salts, isomers and derivatives thereof.

According to an aspect of the disclosure, the agrochemical ingredient of low water solubility from the imidazole group comprises climbazole, clotrimazole, imazalil, oxpoconazole, prochloraz, or triflumizole.

According to an aspect of the disclosure, the agrochemical ingredient of low water solubility from the triazole group comprises azaconazole, bromuconazole, cyproconazole, diclobutrazol, difenoconazole, diniconazole, diniconazole-M, epoxiconazole, etaconazole, fenbuconazole, fluquinconazole, flusilazole, flutriafol, furconazole, furconazole-cis, hexaconazole, imibenconazole, ipconazole, ipfentrifluconazole, mefentrifluconazole, metconazole, myclobutanil, penconazole, propiconazole, prothioconazole, quinconazole, simeconazole, tebuconazole, tetraconazole, triadimefon, triadimenol, triticonazole, uniconazole or uniconazole-P.

According to an aspect of the disclosure, the agrochemical ingredient of low water solubility from the conazole group is prothioconazole, tebuconazole, or difenoconazole.

In an aspect of the disclosure, the agrochemical ingredient of low solubility from the conazole group is present in an amount from about 0.1% w/w to about 70% w/w of the total weight of the composition.

In an aspect of the disclosure, the agrochemical ingredient of low solubility from the conazole group is present in an amount from about 0.5% w/w to about 60% w/w of the total weight of the composition.

In a preferred aspect of the disclosure, the agrochemical ingredient of low solubility from the conazole group is present in an amount from about 1% w/w to about 50% w/w of the total weight of the composition.

According to an aspect of the disclosure, the agrochemical ingredient of low water solubility is a triazolone agrochemical ingredient.

According to an aspect of the disclosure, the agrochemical ingredient of low water solubility from the triazolone group comprises amicarbazone, bencarbazone, carfentrazone, flucarbazone, ipfencarbazone, propoxycarbazone, sulfentrazone, thiencarbazone, their salts and derivatives thereof.

According to an aspect of the disclosure, the agrochemical ingredient of low water solubility from the triazolone group is carfentrazone, amicarbazone, sulfentrazone their salts and derivative thereof. In an embodiment of the invention, the the agrochemical ingredient of low water solubility is carfentrazone-ethyl.

In an aspect of the disclosure, the composition comprises an agrochemical ingredient of low water solubility from the triazolone group in an amount from about 0.1% w/w to about 70% w/w of the total weight of the composition.

In an aspect of the disclosure, the composition comprises an agrochemical ingredient of low water solubility from the triazolone group in an amount from about 0.5% w/w to about 60% w/w of the total weight of the composition.

In an aspect of the disclosure, the composition comprises an agrochemical ingredient of low water solubility from the triazolone group in an amount from about 1% w/w to about 50% w/w of the total weight of the composition.

The composition of the invention is a stable dispersible concentrate.

According to an embodiment, the composition may further contain other auxiliary ingredients, such as anionic and non-ionic surfactants, defoamers, thickeners, dispersants, stabilizers, adjuvants, preservatives, polymers, acids and bases, dyes, antifreeze, biocides, fillers and water. An adjuvant in this context is a component that enhances the biological effect of the formulation without the component itself having a biological effect. Examples of adjuvants are agents that promote retention, spreading behaviour, adherence to the leaf surface, or penetration.

According to an aspect of the disclosure, the composition comprises an agrochemical ingredient with low water solubility in an amount from about 0.1% w/w to about 50% w/w and crystallization controlling mix from about 1% w/w to about 70% w/w of the total weight of the composition.

According to an aspect of the disclosure, the composition comprises an agrochemical ingredient with low water solubility in an amount from about 5% w/w to about 60% w/w and crystallization controlling mix from about 10% w/w to about 50% w/w of the total weight of the composition.

According to an aspect of the disclosure, the composition comprises an agrochemical ingredient with low water solubility from the conazole group in an amount from about 0.1% w/w to about 50% w/w and crystallization controlling mix in an amount from about 1% w/w to about 70% w/w of the total weight of the composition.

According to an aspect of the disclosure, there is provided a composition comprising an agrochemical ingredient with low water solubility from the conazole group in an amount from about 0.1% w/w to about 50% w/w, 1% w/w to about 70% w/w cyclic amide, 0.1% w/w to about 50% w/w carboxylic acid derivative, 0.1% w/w to about 50% w/w alkoxylated vegetable oil of the total weight of the composition.

According to an aspect of the disclosure, there is provided a composition comprising from about 0.1% w/w to about 50% w/w an agrochemical ingredient with low water solubility from the conazole group of fungicides, 5% w/w to about 60% w/w cyclic amide, 1% w/w to about 40% w/w carboxylic acid derivative, 0.5% w/w to about 40% w/w alkoxylated vegetable oil of the total weight of the composition.

According to an aspect of the disclosure, there is provided a composition comprising from about 0.1% w/w to about 50% w/w an agrochemical ingredient with low water solubility from the conazole group, 10% w/w to about 50% w/w cyclic amide, 5% w/w to about 30% w/w carboxylic acid derivative, 1% w/w to about 30% w/w alkoxylated vegetable oil of the total weight of the composition.

According to an embodiment of the invention, there is provided a composition comprising from about 0.1% w/w to about 50% w/w prothioconazole, 10% w/w to about 50% w/w N-butyl-pyrrolidone, 5% w/w to about 30% w/w ethyl-s-lactate, 1% w/w to about 30% w/w ethoxylated castor oil of the total weight of the composition.

According to an aspect of the disclosure, the stable dispersible concentrate composition comprises an agrochemical ingredient with low water solubility from the conazole group in an amount from about 0.1% w/w to about 50% w/w and crystallization controlling mix in an amount from about 1% w/w to about 70% w/w of the total weight of the stable dispersible concentrate composition.

According to an aspect of the disclosure, there is provided a composition comprising an agrochemical ingredient with low water solubility from the triazolone group in an amount from about 0.1% w/w to about 50% w/w and crystallization controlling mix in an amount from about 1% w/w to about 70% w/w of the total weight of the composition.

According to an aspect of the disclosure, there is provided a composition comprising from about 0.1% w/w to about 50% w/w an agrochemical ingredient with low water solubility from the triazolone group, 1% w/w to about 70% w/w cyclic amide, 0.1% w/w to about 50% w/w carboxylic acid derivative , 0.1% w/w to about 50% w/w alkoxylated vegetable oil of the total weight of the composition.

According to an aspect of the disclosure, there is provided a composition comprising from about 0.1% w/w to about 50% w/w an agrochemical ingredient with low water solubility from the triazolone group, 5% w/w to about 60% w/w cyclic amide, 1% w/w to about 40% w/w carboxylic acid derivative, 0.5% w/w to about 40% w/w alkoxylated vegetable oil of the total weight of the composition.

According to an aspect of the disclosure, there is provided a composition comprising from about 0.1% w/w to about 50% w/w an agrochemical ingredient with low water solubility from the triazolone group, 10% w/w to about 50% w/w cyclic amide, 5% w/w to about 30% w/w carboxylic acid derivative, 1% w/w to about 30% w/w alkoxylated vegetable oil of the total weight of the composition.

According to an embodiment of the invention, there is provided a stable dispersible concentrate composition comprising from about 0.1% w/w to about 50% w/w carfentrazone-ethyl, 10% w/w to about 50% w/w N-butyl-pyrrolidone, 5% w/w to about N,N-dimethyldecanamide, 1% w/w to about 30% w/w ethoxylated castor oil of the total weight of the stable dispersible concentrate composition.

According to an aspect of the disclosure, there is provided a stable dispersible concentrate composition comprising an agrochemical ingredient with low water solubility from the triazolone group in an amount from about 0.1% w/w to about 50% w/w and a crystallization controlling mix in an amount from about 1% w/w to about 70% w/w of the total weight of the stable dispersible concentrate composition.

According to an aspect of the present disclosure, the compositions of the disclosure are prepared as per the following table:

| **Ingredient** | **Range (AMOUNT (GMS/LIT))** |
|---|---|
| Agrochemical ingredient with low water solubility | **250-258** |
| Cyclic amide | **300-350** |
| Carboxylic acid or a derivative thereof | **120-180** |
| Alkoxylated vegetable oil | **120-180** |
| Surfactants/emulsifiers, for eg: Polyoxyalkylene block copolymers | **170-220** |

The disclosure further provides a process of preparing a composition comprising an agrochemical ingredient of low water solubility; and a crystallization controlling mix comprising a cyclic amide, an ester or amide carboxylic acid derivative, and an alkoxylated vegetable oil, wherein said process comprising mixing the agrochemical ingredient of low water solubility with the crystallization controlling mix.

There is provided a process of preparing a composition comprising an agrochemical ingredient of low water solubility; and a crystallization controlling mix comprising a cyclic amide, an ester or amide carboxylic acid derivative, and an alkoxylated vegetable oil, wherein said process comprising mixing a conazole or triazolone agrochemical ingredient with the crystallization controlling mix.

There is provided a process of preparing a composition comprising an agrochemical ingredient of low water solubility; and a crystallization controlling mix comprising a cyclic amide, an ester or amide carboxylic acid derivative, and an alkoxylated vegetable oil , comprising
1. charging the crystallization controlling mix in a vessel and optionally, adding other auxiliary ingredients;
2. charging the agrochemical ingredient of low water solubility in the vessel of step (1) to provide a mixture; and
3. homogenizing the mixture to provide the composition.

In an aspect, the agrochemical ingredient of low water solubility is prothioconazole.

In an aspect, the agrochemical ingredient of low water solubility is carfentrazone-ethyl.

In an aspect, the crystallization controlling mix comprises N-butyl-pyrrolidone, ethyl-s-lactate, and castor oil ethoxylate.

According to an aspect of the disclosure, the composition prepared herein is a stable dispersible concentrate.

A method of controlling pests comprises applying the compositions described herein to a pest or a habitat area of the pest.

In an aspect, the agrochemical ingredient of low water solubility comprises a conazole or triazolone agrochemical ingredient.

In an aspect, the pests are harmful organisms, and the compositions are applied to their habitat, their hosts, such as plants and seed, and the soil, the area and the environment in which they grow or could grow, but also of materials, plants, seeds, soil, surfaces or spaces which are to be protected from attack or infestation by organisms that are harmful to plants.

The present disclosure provides a method of controlling pests, said method comprising applying a composition comprising:
a) prothioconazole; and
b) a crystallization controlling mix comprising a cyclic amide, a carboxylic acid or a derivative thereof and an alkoxylated vegetable oil;
to a pest or a habitat area.

The present disclosure provides a method of controlling pests, said method comprising applying stable dispersible concentrate composition comprising:
a) carfentrazone-ethyl; and
b) a crystallization controlling mix comprising a cyclic amide, a carboxylic acid or a derivative thereof and an alkoxylated vegetable oil;
to a pest or a habitat area.

According to an aspect of the disclosure, the composition is a stable dispersible concentrate.

According to an aspect of the disclosure, the composition is used as pesticide.

According to an aspect of the disclosure, the composition is used to control pests, especially plant pests.

According to an aspect of the disclosure, the composition is useful for controlling a large number of pests and can be used either for treatment of plant crops or for treatment of inanimate material and in the household.

According to an aspect of the disclosure, the compositions are useful as fungicides for controlling a large number of pests for treatment of plant crops including: cotton, flax, grapevines, fruit, vegetables, such as *Rosaceae* sp. (for example pome fruit such as apples and pears, but also stone fruit such as apricots, cherries, almonds and peaches, and berry fruits such as strawberries), *Ribesioidae* sp., *Juglandaceae* sp., *Betulaceae* sp., *Anocardiacece* sp., *Fagaceae* sp., *M oracece* sp., *Oleaceae* sp., *Actinidaceae* sp., *Lauraceae* sp., *Musaceae* sp. (for example banana trees and plantations), *Rubiaceae* sp. (for example coffee), *Theaceae* sp., *Sterculicece* sp., *Rutaceae* sp. (for example lemons, organs and grapefruit); *Solanaceae* sp. (for example tomatoes), *Liliaceae* sp., *Asteraceae* sp. (for example lettuce), *Umbelliferae sp., Cruciferce sp., Chenopodiacece* sp., *Cucurbitaceae* sp. (for example cucumbers), *Alliaceae* sp. (for example leeks, onions), *Papilionaceae* sp. (for example peas); main crop plants such as *Gramineae* sp. (for example maize, turfgrass, cereals such as wheat, rye, rice, barley, oats, sorghum/millet and triticale), *Asteraceae* sp. (for example sunflowers), *Brassicaceae* sp. (for example white cabbage, red cabbage, broccoli, cauliflower, Brussels sprouts, Pak Choi, kohlrabi, radishes, and rapeseed, mustard, horseradish and cress), *Fabacae* sp. (for example beans, peanuts), *Papilionaceae* sp. (for example soya beans), *Solanaceae* sp. (for example potatoes), *Chenopodiacece* sp. (for example sugar beet, fodder beet, chard, beetroot); sugarcane, poppies, olives, coconuts, cocoa, tobacco and useful plants and ornamental plants in gardens and forests; and genetically modified varieties of each of these plants, and the seeds of these plants.

According to an aspect of the disclosure, the compositions are useful as herbicides for controlling a large number weed plants selected from *Echinochloa crusgalli* (barnyard grass), *Lappula squarroso* (bluebur), *Cirsium arvense* (Canadian thistle), *Stellaria media* (chickweed), *Galium aparine* (cleavers), *Voccoric hispanica* (cow cockle), *Taraxacum officinale* (dandelion), *Equisetum arvense* (field horsetail), *Descurainia sophic* (flixweed), *Setaria viridis* (green foxtail), *Polygonum scabrum* (green smartweed), *Galeopsis tetrahit* (hemp nettle), *Kochic scoparia, Chenopodium album* (lamb's-quarters), *Crepis tectorum* (narrow leaf hawksbeard), *Amaranthus retroflexus* (redroot pigweed), *Salsolo pestifer* (Russian thistle), *Capsella bursa-pastoris* (shepherd's-purse), *Sonchus sp.* (sow thistle), stinkweed, *Erodium cicutarium* (stork's bill), *Polygonum convolvulus* (wild buckwheat), *Sinapis arvensis* (wild mustard), *Avena fatua* (wild oats), wild rose, *Taraxacum officinale* (dandelion), *Kochia scoparia, Chenopodium album* (lamb's-quarters), *Crepis tectorum* (narrow leaf hawksbeard), *Chenopodium album* (lamb's-quarters), *Amaranthus retroflexus* (redroot pigweed), *Polygonum convolvulus* (wild buckwheat), *Sinapis arvensis* (wild mustard), *volunteer oilseed rape,* in particular volunteer Canola.

According to an aspect of the disclosure, the compositions are used to treat fungal infestation in crops such as barley, durum wheat, oats, oilseed rape (winter), rye (winter) and wheat.

According to an aspect of the disclosure, the composition can be deployed, for example, in the formulation forms customary for liquid preparations, either as such or after prior dilution with water. Application is affected by customary methods, i.e., for example by spraying, pouring or injecting.

According to an aspect of the disclosure, the composition can be applied in undiluted form or diluted with water.

According to an aspect of the disclosure, the compositions are diluted with at least one part water, preferably with 10 parts water and more preferably with at least 100 parts water, for example with 1 to 10 000, preferably 10 to 5000 and more preferably with 50 to 24000 parts water, based on one part of the composition.

According to an aspect of the disclosure, the composition provides a suspension obtainable by mixing water with the composition.

According to an aspect of the disclosure, the mixing ratio of water to the composition of the present invention may be in the range from 1000:1 to 1:1, preferably 400:1 to 10:1.

According to an aspect of the disclosure, the dilution is achieved by pouring the composition of the present invention into the water.

According to an aspect of the disclosure, for rapid mixing of the composition with water, it is customary to use agitation, for example stirring. However, agitation is generally unnecessary.

According to an aspect of the disclosure, dilution with water is typically conducted at temperatures in the range from 0° C. to 50° C., especially at 10° C. to 30° C. or at ambient temperature.

According to an aspect of the disclosure, water used for dilution is generally tap water. The water may, however, already contain water-soluble or finely dispersed compounds which are used in crop protection, for instance nutrients, fertilizers or pesticides.

It is possible to add various kinds of oils, wetting agents, adjuvants, fertilizers or micronutrients and further pesticides (e.g. herbicides, insecticides, fungicides, growth regulators, safeners) to the composition of the present disclosure in the form of a premix or, if appropriate, not until shortly before use (tank-mix).

According to an aspect of the disclosure, the compositions may be added to the formulations of the invention in a weight ratio of 1:100 to 100:1, preferably 1:10 to 10:1.

The user will apply the formulation typically from a pre-dosing system, a backpack sprayer, a spraying tank, a spraying aircraft or an irrigation system; the formulation is typically diluted to the desired deployment concentration with water, buffer and/or further auxiliaries, which affords a ready-to-use spray liquid or agrochemical composition. Typically, 20 to 2000 litres, preferably 50 to 400 litres, of the ready-to-use spray liquor are deployed per hectare of useful agricultural area.

According to an aspect of the disclosure, the generally diluted formulations of the invention are applied mainly by spraying, especially spraying of the leaves of plants.

According to an aspect of the disclosure, application can be conducted by spraying techniques known to those skilled in the art, for example using water as carrier and amounts of spray liquor of about 50 to 1000 litres per hectare, for example from 100 to 200 litres per hectare.

The compositions described herein have advantageous properties in respect of stability of the composition, the treatment of plants and less phytotoxicity to the plants.

The invention is illustrated in detail by the examples but is not restricted thereto.

### Examples:

### Example 1: A composition of Prothioconazole 250 g/L DC

| **Ingredient** | **Content (g/L)** |
|---|---|
| Prothioconazole | 255 |
| N-butylpyrrolidone | 325 |
| Ethyl-s-lactate | 150 |
| Ethoxylated castor oil | 150 |
| Polyoxyalkylene block copolymers | 200 |

325g N-butylpyrrolidone, 150g ethyl-s-lactate and 150g ethoxylated castor oil were mixed in a vessel to provide the crystallization controlling mix. 255g prothioconazole was added to the crystallization controlling mix and mixed. Further, 200g polyoxyalkylene block copolymers was added and mixed to provide the mixture. The mixture was warmed and then homogenized by shaking. The mixture was cooled to ambient temperature. The mixture was again homogenized by shaking. The mixture was filtered over a filter having a pore size of 5 micron to provide a dispersible concentrate composition

### Example 2: A composition of Carfentrazone 60 g/L DC

| **Ingredient** | **Content (g/L)** |
|---|---|
| Carfentrazone | 64.7 |
| N-butylpyrrolidone | 425.2 |
| N,N-dimethyldecanamide | 20 |
| Ethoxylated castor oil | 130 |
| Polyoxyalkylene block copolymers | 200 |
| Methyl soyate | 150 |
| Polydimethylsiloxane emulsion | 0.1 |

425.2g N-butylpyrrolidone, 20g N,N-dimethyldecanamide and 130g ethoxylated castor oil were mixed in a vessel to provide the crystallization controlling mix. 64.7g carfentrazone-ethyl was added to the crystallization controlling mix and mixed. Further, 200g polyoxyalkylene block copolymers, 150g methyl soyate and 0.1g polydimethylsiloxane emulsion were added and mixed to obtain mixture. The mixture was warmed for 40 seconds and then homogenized by shaking. The mixture was cooled to ambient temperature. The mixture was again homogenized by shaking. The mixture was filtered over a filtered having a pore size of 5 micron to obtain dispersible concentrate composition.

### Test for suspensibility and stability of the active ingredient

The stable dispersible concentrate compositions prepared according to Examples 1 and 2 were investigated for the dispersion stability of active ingredients, particle size, pH, foam and its effect on stability of the composition.

As shown in Table 1, no significant change was observed in the content of prothioconazole in the composition of Example-1 when studied at ambient conditions as well as in Accelerated Heat stability (AHS) (after 2 weeks at 54°C). Similarly, carfentrazone-ethyl content of the composition of Example-2 remained constant when studied at ambient conditions as well as in AHS (after 2 weeks at 54°C). The pH of both the stable dispersible concentrate compositions of Exampel-1 and Example-2 were found to be in the range of 4-5. Upon 30 inversions, the foam in both the composition remained within acceptable range. No cream nor oil was seen within 24h in both of the compositions upon visual observation.

The compositions of Example-1 and Example-2 were further tested for dispersion stability upon dilution according to CIPAC test 180. 1% DC compositions of Example-1 and Example-2 were separately diluted with 200ml of water to provide dispersion and studied for stability upon dilution in ambient conditions and AHS conditions. Both the compositions of Example-1 and Example-2 were studied after 30 inversion each. It was found that both the compositions of Example-1 and Example-2 formed uniform dispersions upon dilution in ambient and AHS conditions. No crystals were seen when the dispersions were allowed to stand for 24 hours prior to testing. Also, the compositions of Example-1 and Example-2 showed re-dispersibility after 24 hours.

**Table 1 Physical properties of Dispersible Concentrate (DC) compositions:**

| | **Prothioconazole 250 g/L DC** | | **Carfentrazone 60g/L DC** | |
|---|---|---|---|---|
| | **Example-1** | | **Example-2** | |
| **Stability Parameters of Dispersible Concentrate** | | | | |
| | Initial | after 2 wks at 54°C | Initial | after 2 wks at 54°C |
| Content of active (g/kg) | 251.7 | 251.7 | 58.6 | 58.6 |
| Density | 1.080 | n.d. | 0.991 | n.d. |
| pH (1%) | 4.33 | n.d. | 4.96 | 4.18 |
| Foam(ml)(1 min) (CIPAC method 47.3) | 5 | 5 | 0 | 0 |
| Particle size (after dilution in water)D50 (µm) | 0.67 | - | 0.83 | - |
| D90 | 3.0 | - | 4.02 | - |

| **Stability Parameters of Dispersion upon dilution** | | | | |
|---|---|---|---|---|
| Dispersion stability | Good | Good | Good | Good |
| Crystals after 24 hours | No | No | No | No |
| Redispersibility after 24 hours | Yes | Yes | Yes | Yes |

### Phytotoxicity Study:

The composition of Example-1 was tested to ascertain the phytotoxicity of the finished composition. Treatment was done by spraying wheat plants with a diluted composition in different spray doses from normal (N) dose of 200 g/Ha prothioconazole to 4N (4 time normal) dose on wheat plants at the three leaf stage. After application, the plants were placed in a climate chamber for 14 days mimicking a day and night cycle in light intensity and temperature. The degree of phytotoxicity in each experiment was visually evaluated by measuring the amount of damage on the leaves. Each experiment was done in 7 replicates.

The performance of the composition of Example-1 was further compared with the prothioconazole 250 g/L EC (Commercial) having an N,N-dimethyl alkylamide solvent. Treatment was done by spraying the wheat plants with the diluted composition at different spray doses from normal (N) dose of 200 g/Ha prothioconazole to 4N dose on wheat plants at three leaf stage. After application, the plants were placed in a climate chamber for 14 days mimicking a day and night cycle in light intensity and temperature. The degree of phytotoxicity in each experiment was visually evaluated by measuring the amount of damage on the leaves.

**Table 2 Phytotoxicity tests of different Prothioconazole formulations.**

| | | | ***Damage on leaves after application*** | | | |
|---|---|---|---|---|---|---|
| **Example** | **Treatment** | ***Solvent system*** | ***N dose*** | ***2N dose*** | ***3N dose*** | ***4N dose*** |
| 1 | Prothioconazole 250 g/L DC (Example-1) | Crystallization controlling mix | No | 10-30% | 10-30% | 10-30% |
| 2 | Prothioconazole 250 g/L EC (Commercial) | N,N-dimethyl alkylamide solvent | 0-10% | 10-30% | 30-50% | 50-70% |

| | | | | | | |
|---|---|---|---|---|---|---|
| Remarks: - N-dose: 200 g Prothioconazole/Ha; Amount of damage on leaf was mean of 7 replicates | | | | | | |

It was observed that reduced phytotoxicity occurred after application with the prothioconazole 250 g/L DC formulations (Example-1) than the control prothioconazole 250 g/L EC (commercially available) formulation having N,N-dimethyl alkylamide as a solvent system.

### Development of crystallization controlling mix

While tackling the crystallization problem in the composition of agrochemical ingredient(s) of low water solubility, several ingredients with different chemistries were tried. Ethoxylated castor oil was found to be effective in controlling crystallization to some extent. Different ingredients were combined with ethoxylated castor oil. Various ingredients of the composition of Example-1 were kept constant and the crystallization controlling mixe A to M were prepared by combining different ingredients like poly(ethylene glycol-co-propylene glycol) monobutyl ether, polymeric surfactants (such as Atlox^{™} 4913, Atlox^{™} 4916, Zephrym^{™} PD 3315) and 2,4,6-tris(1-phenylethyl)-phenol polyglycolether, methyl soyate, a mixture of N-formyl morpholine and propylene carbonate, n-propyl-s-lactate, ethyl-s-lactate and N,N-dimethyllactamide. While going through a series of experiments, the inventors found that a combination of an alkoxylated vegetable oil, a carboxylic acid derivative and a cyclic amide were are important for controlling the crystallization problem. The compositions from A to M either failed in appearance or crystallized after 24 hours or suffered re-dispersibility problems. Moreover, the compositions of Example-1 and Example-2 which included alkoxylated vegetable oil, a carboxylic acid derivative, and a cyclic amide did not show crystal growth, remained dispersible after 24 hours; and were acceptable on visual inspection. Therefore, the inventor determined the crystallization control formula comprising alkoxylated vegetable oil, carboxylic acid derivative and cyclic amide and successfully developed the compositions of Example-1 and Example-2 of the present invention. (Table 3)

**Table 3**

| | **A** | **B** | **C** | **D** | **E** | **F** | **G** | **H** | **I** | **J** | **K** | **L** | **M** | **Ex.1** | **Ex.2** |
|---|---|---|---|---|---|---|---|---|---|---|---|---|---|---|---|
| **Chemical name** | | | | | | | | | | | | | | | |
| Ethoxylated castor oil | 225 | 225 | 225 | 225 | 225 | 130 | 225 | 130 | 130 | 130 | 130 | 130 | 130 | 150 | 130 |
| Poly(ethylene glycol-co-propylene glycol) monobutyl ether | | 100 | 100 | 100 | 100 | 150 | 100 | 200 | 200 | 150 | 150 | 150 | 200 | | |
| Polymeric surfactants | | | 60 | 60 | 60 | 150 | | | | | | | | 200 | 200 |
| 2,4,6-tris(1-phenylethyl)-phenol polyglycolether | | | | | | | 75 | | | | | | | | |
| Mixture of N-formyl morpholine and propylene carbonate | | | | | | | | | | 150 | 125 | | | | |
| n-propyl-s-lactate/ Ethyl-s-lactate | | | | | | | | | | | | 125 | | 150 | |
| Methyl soyate | | | | | | | | | | | | | | | 150 |
| N,N-dimethyllactamide | | | | | | | | | | | | | 100 | | 20 |
| N-butyl-pyrrolidone | | | | | | | | | | | | | | 325 | 425.2 |
| | | | | | | | | | | | | | | | |
| Visual appearance | **P** | **G** | **G** | **G** | **G** | **G** | **G** | **G** | O | G | G | G | G | G | G |
| Crystals after 24 h | **oil** | **++** | **++** | **++** | **++** | **++** | **++** | **++** | ++ | + | ++ | + | -/+ | - | - |
| Redispersibility after 24h | **N** | **N** | **N** | **N** | **N** | **N** | **N** | **N** | N | N | N | N | Y | Y | Y |

| | | | | | | | | | | | | | | | |
|---|---|---|---|---|---|---|---|---|---|---|---|---|---|---|---|
| P: Poor, G: Good; O: Opalescent; Redispersibility: N means non-dispersible and Y means re-dispersible. Crystal growth: ++ means > expected crystal growth, - means no crystal growth and -/+ means crystal growth in AHS study. | | | | | | | | | | | | | | | |

Therefore, it was found that stable DC compositions of agrochemical ingredients of low water solubility was obtained using a crystallization controlling mix comprising a cyclic amide, an carboxylic acid derivative, and an alkoxylated vegetable oil. The compositions prepared according to the present disclosure remain stable according to the tested physico-chemical parameters. The DC composition was found to be better performing in terms of less phytotoxicity to the plants when compared with a commercially available EC formulation.

## Claims

1. A stable dispersible concentrate, comprising:
i) an agrochemical ingredient of low water solubility selected from prothioconazole and carfentrazone-ethyl; and
ii) a crystallization controlling mix comprising:
a) n-butylpyrrolidone;
b) ethyl-s-lactate or N,N-dimethyldecanamide; and
c) ethoxylated castor oil;
wherein the composition comprises the agrochemical ingredient of low water solubility in an amount from 0.1 % w/w to 70 % w/w of the total weight of the composition; and
wherein the composition comprises the crystallization controlling mix in an amount from 1 % w/w to 70 % w/w of the total weight of the composition.

2. The composition as claimed in claim 1, comprising
i) prothioconazole; and
ii) n-butylpyrrolidone, ethyl-s-lactate and ethoxylated castor oil

3. The composition as claimed in claim 1, comprising
i) carfentrazone-ethyl; and
ii) n-butylpyrrolidone, ethyl-s-lactate and ethoxylated castor oil.

4. A process of preparing the composition according to any preceding claim, said process comprising:
i) charging the crystallization controlling mix in a vessel and optionally, adding other auxiliary ingredients;
ii) charging the agrochemical ingredient of low water solubility in the vessel to provide a mixture; and
iii) homogenizing the mixture to provide the composition.

5. A non-therapeutic method of controlling pests, wherein the method comprises applying the composition as claimed in claim 1 to a pest or a habitat area of the pest.

## Patentansprüche

1. Stabiles dispergierbares Konzentrat, umfassend:
i) einen agrochemischen Inhaltsstoff mit geringer Wasserlöslichkeit, ausgewählt aus Prothioconazol und Carfentrazone-ethyl; und
ii) eine kristallisationskontrollierende Mischung, umfassend:
a) n-Butylpyrrolidon;
b) Ethyl-s-lactat oder N,N-Dimethyldecanamid; und
c) ethoxyliertes Rizinusöl;
wobei die Zusammensetzung den agrochemischen Bestandteil mit geringer Wasserlöslichkeit in einer Menge von 0,1 Gew.-% bis 70 Gew.-%, bezogen auf das Gesamtgewicht der Zusammensetzung, umfasst; und
wobei die Zusammensetzung die kristallisationskontrollierende Mischung in einer Menge von 1 Gew.% bis 70 Gew.%, bezogen auf das Gesamtgewicht der Zusammensetzung, umfasst.

2. Zusammensetzung nach Anspruch 1, umfassend
i) Prothioconazol; und
ii) n-Butylpyrrolidon, Ethyl-s-lactat und ethoxyliertes Rizinusöl.

3. Zusammensetzung nach Anspruch 1, umfassend
i) Carfentrazone-ethyl; und
ii) n-Butylpyrrolidon, Ethyl-s-lactat und ethoxyliertes Rizinusöl.

4. Prozess zum Herstellen der Zusammensetzung nach einem der vorstehenden Ansprüche, der Prozess umfassend:
i) Einfüllen der kristallisationsfördernden Mischung in ein Gefäß und optional Hinzufügen weiterer Hilfsstoffe;
ii) Einfüllen des schwer wasserlöslichen agrochemischen Inhaltsstoffs in den Behälter, um eine Mischung bereitzustellen; und
iii) Homogenisieren der Mischung, um die Zusammensetzung bereitzustellen.

5. Nicht-therapeutisches Verfahren zur Bekämpfung von Schädlingen, wobei das Verfahren das Auftragen der Zusammensetzung nach Anspruch 1 auf einen Schädling oder ein Habitatgebiet des Schädlings umfasst.

## Revendications

1. Concentré dispersable stable, comprenant :
i) un ingrédient agrochimique faiblement soluble dans l'eau choisi parmi le prothioconazole et le carfentrazone-éthyle ; et
ii) un mélange de contrôle de cristallisation comprenant du/de l' :
a) n-butylpyrrolidone ;
b) éthyl-s-lactate ou N,N-diméthyldécanamide ; et
c) huile de ricin éthoxylée ;
dans lequel la composition comprend l'ingrédient agrochimique faiblement soluble dans l'eau en une quantité allant de 0,1 % p/p à 70 % p/p du poids total de la composition ; et
dans lequel la composition comprend le mélange de contrôle de cristallisation en une quantité allant de 1 % p/p à 70 % p/p du poids total de la composition.

2. Composition selon la revendication 1, comprenant du/de l'
i) prothioconazole ; et
ii) n-butylpyrrolidone, éthyl-s-lactate et huile de ricin éthoxylée

3. Composition selon la revendication 1, comprenant du/de l'
i) carfentrazone-éthyle ; et
ii) n-butylpyrrolidone, éthyl-s-lactate et huile de ricin éthoxylée.

4. Procédé de préparation de la composition selon l'une quelconque revendication précédente, ledit procédé comprenant :
i) l'introduction du mélange de contrôle de cristallisation dans un récipient et éventuellement, l'ajout d'autres ingrédients auxiliaires ;
ii) l'introduction de l'ingrédient agrochimique faiblement soluble dans l'eau dans le récipient pour obtenir un mélange ; et
iii) l'homogénéisation du mélange pour obtenir la composition.

5. Procédé non thérapeutique de lutte contre les nuisibles, dans lequel le procédé comprend l'application de la composition selon la revendication 1 sur un nuisible ou sur une zone d'habitat du nuisible.
